# EUROPEAN PATENT SPECIFICATION

(11) **EP 1 697 932 B1**
(45) Date of publication and mention of the grant of the patent: **22.09.2010**
(21) Application number: 04795647.9
(22) Date of filing: 19.10.2004
(51) Int. Cl.: G10L 21/02, H04R 3/00, H04M 1/19, H04M 1/03

(54) **MULTI-MODE AUDIO PROCESSORS AND METHODS OF OPERATING THE SAME**
MULTIMODUS-AUDIOPROZESSOREN UND BETRIEBSVERFAHREN DAFÜR
PROCESSEURS AUDIO MULTIMODAUX ET PROCEDES DE FONCTIONNEMENT

(30) Priority: 22.12.2003 US 743670
(43) Date of publication of application: 06.09.2006
(73) Proprietor: Sony Ericsson Mobile Communications AB, 221 88 Lund (SE)
(72) Inventor: MURRAY, Matt, Raleigh, NC 27607 (US)
(74) Representative: Clarke, Alison Clare
(86) International application number: PCT/US2004/034511
(87) International publication number: WO 2005/069279

(56) References cited:
- EP-A- 0 898 441
- WO-A-00/53138
- WO-A-01/56328
- WO-A-92/17019
- WO-A-94/11953
- WO-A-2004/091254
- US-A1- 2002 137 478

## Description

### BACKGROUND OF THE INVENTION

The present invention relates to audio systems for personal use, such as in portable electronic devices and, more particularly, to audio processors for use in portable electronic devices.

Manufacturers and designers of portable electronic devices, such as mobile telephones, frequently seek to reduce the overall dimensions of such devices while maintaining attractive style characteristics for the devices. One consequence of the reduced size for such devices is that less space may be available for the required components that provide the necessary functionality of the phone as well as components that provide additional functionality. As the space available for the hardware components decreases in the portable electronic devices, it may become more difficult to support additional functionality.

Conventional mobile telephones typically provide noise cancellation to suppress unwanted background noise and enable the participants in a conversation to comprehend one another. Noise cancellation may be provided by, for example, applying sophisticated noise cancellation algorithms to signals provided by a microphone disposed in the housing of the mobile telephone.

Noise cancellation algorithms may be used in portable electronic devices having a single microphone or multiple microphones. Single microphone devices may include omnidirectional microphones that are designed to detect sound equally in all directions. Noise cancellation algorithms in phones using omnidirectional microphones may have difficulty differentiating between wanted and unwanted noise.

Time delay processing may be used in portable electronic devices having both single and multiple microphones to enhance the cancellation effect of background noise. Furthermore, microphones may be made somewhat directional (bi-directional or uni-directional), *i.e.,* more sensitive to sound coming from a particular direction, by having respective ports to receive sound from respective sides of the microphone. Multiported, directional microphones may provide improvements over single ported omnidirectional microphones, however, may suffer from other problems caused by, for example, wind noise.

Some conventional electronic devices include multiple microphones. These microphones may be directional microphones designed to be more sensitive in certain directions. With multiple microphones, a noise cancellation algorithm can use the known spatial relationship of the microphones to be more selective of which sounds are cancelled and which sounds are amplified. Thus, the use of two or more microphones provides multiple inputs to the noise cancellation algorithm and may increase the directionality of the cancellation algorithm. However, adding additional microphones to the mobile telephone may be problematic due to size limitations of portable electronic devices. Accordingly, improved devices for and methods of noise cancellation may be desired.

US 2002/0137478 discloses use of a microphone as a speaker as stereophonic speakers in a cellular phone.

WO94/11953 discloses active noise cancellation between a microphone proximate to a speaker.

WO00/53138 discloses a system for cancelling ambient noise in a wireless communication device using a pair of microphones.

EP 0898441 discloses reducing the effect of the loudspeaker on the input acoustic signal.

WO2004/091254 discloses a telecommunications device having a hands-free device in which noise of the loudspeaker is removed from the microphone to prevent an echo.

### SUMMARY OF THE INVENTION

Embodiments of the present invention provide portable electronic devices including a housing and first and second spaced apart transducers positioned in the housing. A multi-mode audio processor circuit is configured to transmit sound from the first transducer in a first mode of operation and to generate a composite audio signal from sound energy received by the first and second transducers in a second mode of operation. A voice activity detector is coupled to the second transducer and configured to detect voice activity received by the second transducer. An audio amplifier is configured to be coupled to the first transducer in the first mode of operation if voice activity is not detected by the voice activity detector. A preamplifier is configured to be coupled to the first transducer in the second mode of operation if voice activity is detected by the voice activity detector. A switch is coupled to the first transducer and configured to isolate a path of the audio amplifier from a path of the preamplifier during the first and second modes of operation. The switch is configured to be in a first position coupled between the first transducer and the audio amplifier in the first mode of operation and to be in a second position coupled between the first transducer and the preamplifier in the second mode of operation.

In some embodiments of the present invention, the multi-mode audio processor circuit may be configured to generate an audio signal from sound energy received by the second transducer in the first mode of operation. The multi-mode audio processor circuit may be further configured to combine first and second audio signals produced from sound energy received by the first and second transducers, respectively, in the second mode of operation to generate a noise-attenuated audio signal.

Some embodiments of the present invention provide a mobile terminal including a housing, a microphone positioned in the housing and a speaker positioned in the housing remote from the microphone. A multi-mode audio processor circuit may be configured to apply noise cancellation to first and second microphone inputs thereof, the first microphone input being coupled to the microphone and the second microphone input being coupled to the speaker.

Further embodiments of the present invention provide a mobile terminal including a multi-mode audio processor circuit operatively associated with a transducer, the multi-mode audio processor circuit being configured to operate the transducer as a speaker during a first mode of operation and a microphone during a second mode of operation.

Some embodiments of the present invention provide a method of operating a mobile terminal including transmitting sound from a first transducer in a first mode of operation and generating a composite audio signal from sound energy received by the first transducer and a second transducer in a second mode of operation.

### BRIEF DESCRIPTION OF THE DRAWINGS

**Figure 1** is a schematic block diagram illustrating mobile terminals including multi-mode audio processing circuits according to some embodiments of the present invention.
**Figure 2** is a schematic block diagram of transducer assemblies operatively associated with multi-mode audio processing circuits according to further embodiments of the present invention.
**Figure 3** is a flow chart illustrating operations of portable electronic devices including multi-mode audio processor circuits according to some embodiments of the present invention.
**Figure 4** is a flow chart illustrating operations of portable electronic devices including multi-mode audio processor circuits which does not form part of the present invention.
**Figure 5** is a flow chart illustrating operations of portable electronic devices including multi-mode audio processor circuits according to still further embodiments of the present invention.

### DETAILED DESCRIPTION

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art. It will be understood that although the terms first and second are used herein to describe various elements, these elements should not be limited by these terms. These terms are only used to distinguish one element from another element. Thus, a first element discussed below may be termed a second element, and similarly, a second element may be termed a first element without departing from the scope of the present invention. As used herein the term "and/or" includes any and all combinations of one or more of the associated listed items.

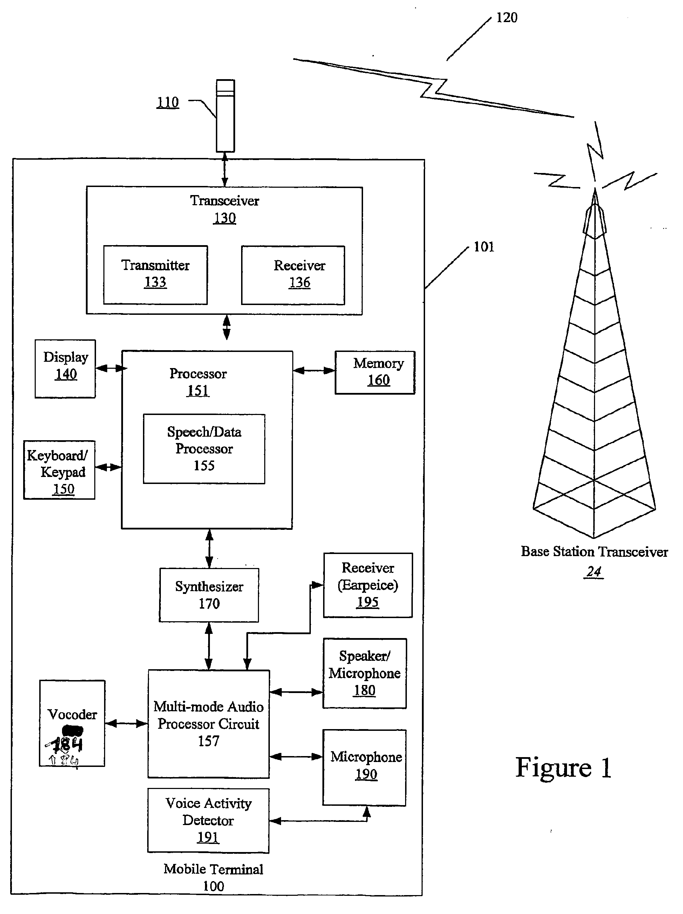

The present invention will be described below with respect to embodiments of the invention illustrated in **Figures 1** through 5. Embodiments of the present invention provide multi-mode audio processor circuits for use in portable electronic devices, for example, mobile terminals. The multi-mode audio processor circuits are configured to transmit sound from a first transducer in a first mode of operation and to generate a composite audio signal from sound energy received by the first transducer and a second transducer in a second mode of operation. In other words, the first transducer may be configured to operate as a speaker, for example, a loudspeaker, in the first mode of operation and a microphone, for example, a dynamic microphone, in the second mode of operation. Accordingly, portable electronic devices including multi-mode audio processors according to embodiments of the present invention may apply two-microphone noise cancellation or other audio signal processing algorithms without providing two physical microphones in the housing of the portable electronic device. Thus, embodiments of the present invention may provide improved devices and methods for noise cancellation or other audio processing without adding additional components.

Multi-mode audio processor circuits according to embodiments of the present invention may be included in portable electronic devices. It will be understood, that, as used herein, the term "portable electronic device" may include a mobile terminal or a cellular radiotelephone with or without a multi-line display; a Personal Communications System (PCS) terminal that may combine a cellular radiotelephone with data processing, facsimile and data communications capabilities; a Personal Data Assistant (PDA) that can include a radiotelephone, pager, Internet/intranet access, Web browser, organizer, calendar and/or a global positioning system (GPS) receiver; and a conventional laptop and/or palmtop portable computer, that may include a radiotelephone transceiver.

Embodiments of the present invention will now be described with reference to the schematic block diagram illustration of a mobile terminal in **Figure 1**. **Figure 1** illustrates an exemplary radiotelephone communication system, in accordance with embodiments of the present invention, which includes a mobile terminal **100** configured to communicate with a base station transceiver **24** of a wireless communications network **120.** The mobile terminal **100** includes a portable housing **101** and may include a keyboard/keypad **150,** a display **140,** a vocoder **184,** a speaker/microphone **180,** a microphone **190,** a receiver **195,** a voice activity detector **191,** a transceiver **130,** and a memory **160** that communicate with a processor **151.** The transceiver **130** typically includes a transmitter circuit **133** and a receiver circuit **136,** which respectively transmit outgoing radio frequency signals to the base station transceiver **24** and receive incoming radio frequency signals, such as voice or other audio signals, from the base station transceiver **24** via an antenna **110.** The radio frequency signals **120** transmitted between the mobile terminal **100** and the base station transceiver **24** may comprise both traffic and control signals (*e.g*., paging signals/messages for incoming calls), which are used to establish and maintain communication with another party or destination.

The processor **151** may support various functions of the mobile terminal **100.** For example, as illustrated in **Figure 1****,** the processor **151** may include a speech/data processing circuit **155.** The speech/data processing circuit may be configured to decode received audio signals from the receiver circuit **136** and selectively provide the decoded audio signals to the speaker/microphone **180** and/or receiver **195.** In some embodiments of the present invention, the speaker/microphone **180** may be a polyphonic loudspeaker and/or a handsfree speaker, for example, a push to talk speaker. In these embodiments of the present invention, the receiver **195** may be included in the mobile terminal **100** for handset audio reception. It will be understood that some embodiments of the present invention do not include the earpiece receiver **195** illustrated in **Figure 1****.** In these embodiments of the present invention, the speaker/microphone **180** may also be used for handset audio reception. As further shown in **Figure 1**, musical instrument digital interface (MIDI) signals may be supplied to the speaker/microphone **180** by a MIDI synthesizer **170** for polyphonic signals, alerting and/or user feedback. Alternatively, synthesizers for other formats may be provided.

The speech/data processing circuit **155** as well as other functional modules not illustrated in **Figure 1****,** but which will be understood to those of skill in the art related to wireless communications including both data and voice communication support, may be provided in the processor **151.** As used herein, the speech/data processing circuit **155** may include components such as demodulators, decoders, interleavers, encrypters and radio frequency (RF) processor circuitry. The processor **151,** such as a microprocessor, microcontroller, or similar data processing device, may execute program instructions stored in a memory **160** of the mobile terminal **100,** such as a dynamic random access memory (DRAM), electrically erasable programmable read-only memory (EEPROM) or other storage device.

The transceiver **130,** the speech/data processing circuit **155** and other components of the mobile terminal **100** may be implemented using a variety of hardware and software. For example, operations of the transceiver **130** and/or the speech/data processing circuit **155** may be implemented using special-purpose hardware, such as an application specific integrated circuit (ASIC) and programmable logic devices such as gate arrays, and/or software or firmware running on a computing device such as a microprocessor, microcontroller or digital signal processor (DSP). Although functions of the transceiver **130** and the other circuits shown in **Figure 1** may be integrated in a single device, such as a single ASIC microprocessor, they may also be distributed among several devices. Aspects of these circuits may also be combined in one or more devices, such as an ASIC, DSP, microprocessor or microcontroller. These various implementations using hardware, software, or a combination of hardware and software will generally be referred to herein as "circuits." The foregoing components of the mobile terminal 100 may be included in many conventional mobile terminals and their functionality is generally known to those skilled in the art.

The base station transceiver **24** is typically a radio transceiver(s) that defines an individual cell in a cellular network and communicates with the mobile terminal **100** and other mobile terminals in the cell using a radio-link protocol. Although only a single base station transceiver **24** is shown, it will be understood that many base station transceivers may be connected through, for example, a mobile switching center and other devices to define a wireless communications network.

Although the present invention may be embodied in communication devices or systems, such as the mobile terminal **100,** it will be understood that the present invention is not limited to such devices and/or systems. Instead, the present invention may be embodied in any apparatus that may utilize a multi-mode audio processor circuit according to embodiments of the present invention.

In accordance with various embodiments of the present invention, a multi-mode audio processor circuit **157** disposed within the mobile terminal **100** is configured to switch the mobile terminal **100** between a first mode of operation and a second mode of operation. It will be understood that the multi-mode audio processor circuit **157** may include, for example, amplifiers and other electronics to provide operations according to embodiments of the present invention. The multi-mode audio processor circuit **157** may be configured to transmit sound from the speaker/microphone **180** (first transducer), *i.e.,* transmit a signal to a user via the speaker/microphone **180,** and to generate an audio signal from sound energy received by the microphone **190** (second transducer) in the first mode of operation. In other words, the speaker/microphone **180** may operate as, for example, a loudspeaker in the first mode of operation and the microphone **190** may operate as, for example, an electret microphone in the first mode of operation. The mobile terminal **100** may operate in the first mode of operation, when the mobile terminal **100** is idle, *i.e*., waiting for a call, or is receiving a request for a call from the base station **24.** The speaker/microphone **180** may be used to provide an alerting tone to notify the user of the call request in the first mode of operation. As discussed above, musical instrument digital interface (MIDI) signals may be supplied to the speaker/microphone **180** by a MIDI synthesizer **170** to provide, for example, polyphonic alerting tones.

Once the call is established and the alerting tones may no longer be active, the multi-mode audio processor circuit **157** may be configured to switch the mobile terminal from the first mode of operation to the second mode of operation. The multi-mode audio processor circuit **157** may be configured to receive sound energy at the speaker/microphone **180** and microphone **190** in the second mode of operation. In other words, the first transducer **180** may operate as a dynamic microphone in the second mode of operation and the second transducer **190** transducer may still operate as an electret microphone in the second mode of operation. The speaker/microphone **180** and microphone **190** receive sound energy and first and second audio signals are produced from the sound energy received by the speaker/microphone **180** and microphone **190.** The multi-mode audio processor circuit **157** may be further configured to combine the first and second audio signals to generate a noise-attenuated audio signal. Thus, a composite audio signal may be generated from sound energy received by the speaker/microphone **180** and microphone **190** in the second mode of operation.

In some embodiments of the present invention, the speaker/microphone **180** may operate as both a dynamic speaker and a dynamic microphone during hands-free operation of the handset, for example, using a push-to-talk functionality, when the user is on a call. These embodiments of the present invention may include a voice activity detector **191** coupled to the microphone **190** in the housing of the portable electronic device as illustrated in **Figure 1****.** Details with respect to these embodiments of the present invention will be discussed further below.

Accordingly, portable electronic devices including multi-mode audio processor circuits **157** according to embodiments of the present invention may apply two-microphone noise cancellation algorithms without providing two physical microphones in the housing of the portable electronic device. In certain embodiments, the speaker/microphone **180** and microphone **190** may have as large a distance as possible between them. The spatial relationship of the speaker/microphone **180** and microphone **190** may be used in the noise cancellation algorithm to be more selective of which sounds are cancelled and which sounds are amplified. For example, the microphone **190** may be positioned closer to where a user's voice originates, for example, close to the user's mouth. Thus, the user's voice (sound energy) will reach the microphone **190** and the speaker/microphone **180** at different times and with different amplitudes. Accordingly, there will be a time delay between when the speaker/microphone **180** and microphone **190** receive the voice signals (sound energy). In contrast, background noise will likely reach the speaker/microphone **180** and microphone **190** at approximately the same time. Thus, the multi-mode audio processor circuit **157** may use the time delays as well as amplitude differences, as well as other characteristics, to determine which signals to amplify and which signals to suppress to provide a composite noise-attenuated audio signal.

It will be understood that two-microphone (multi-microphone) noise cancellation algorithms that use, for example, special relationships, time delay, amplitude differences, spectral characteristics, the characterization of the human voice and the like, to determine which signals to amplify and which signals to suppress are known to those having skill in the art. Accordingly, the details with respect to noise cancellation algorithms will not be discussed further herein. Furthermore, the microphone **190** may be any type of microphone known to those of skill in the art capable of being used in a portable electronic device. For example, the microphone **190** may be, for example, omnidirectional, multidirectional, multiported, condenser, electret, ribbon, dynamic, piezo-type and the like without departing from the scope of the present invention.

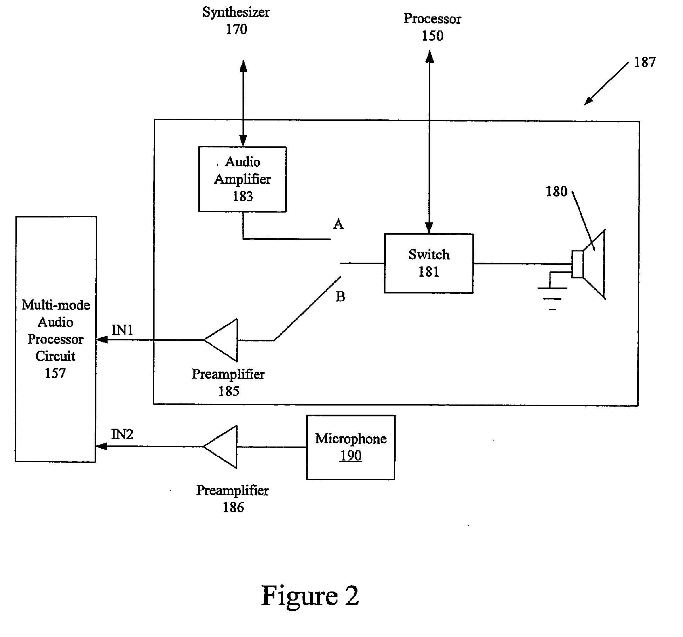

A transducer assembly **187** according to embodiments of the present invention will now be described with reference to the schematic block diagram illustration of **Figure 2****.** As shown in the embodiments of **Figure 2****,** the transducer assembly **187** includes a speaker/microphone **180,** a switch **181,** an audio amplifier **183** and a preamplifier **185.** The speaker/microphone **180** may be a dynamic speaker/dynamic microphone. A dynamic loudspeaker typically includes a coil in close proximity to a magnet and a diaphragm. The diaphragm may be, for example, paper or plastic. In particular, a current flowing through the coil in the loudspeaker produces a magnetic field that interacts with a static magnetic field of the magnet associated with the speaker. This interaction causes the coil and the diaphragm attached to the coil to move in relation to the stationary magnet. When the diaphragm moves up and down, it compresses and expands air around it producing sound energy. A dynamic microphone functions very similar to a dynamic speaker, but in reverse. A microphone is a sound sensitive device, like a speaker, that transmits (carries) dialogue, background noise, music, etc. to a recording or amplification system. A dynamic microphone is a microphone where the changing air pressure, *i.e*., the sound energy, moves the diaphragm (paper or plastic), which moves the coil of wire in the magnetic field of the permanent magnet of the dynamic microphone. Due to the movement of the coil through a magnetic field, an electrical current is produced in the coil of wire that represents the changing air pressure, *i.e.,* the sound energy. Thus, the speaker/microphone **180** according to embodiments of the present invention may be configured to operate as both a speaker and a microphone as discussed above. It will be understood that although the present invention is discussed herein with respect to dynamic speakers and microphones, embodiments of the present invention are not limited to this configuration.

As further illustrated in **Figure 2****,** the speaker/microphone **180** may be included in a transducer assembly **187** according to embodiments of the present invention. As illustrated, the transducer assembly includes an audio amplifier **183.** The audio amplifier **183** is provided to amplify signals before the signals are transmitted to the speaker/microphone **180** during the first mode of operation (speaker). As illustrated, the audio amplifier **183** may amplify an acoustic signal received from the synthesizer **170** or from the downlink voice circuitry of the portable electronic device. The transducer assembly **187** also includes a preamplifier **185.** The preamplifier **185** is provided to amplify an acoustic signal received from the speaker/microphone **180** during the second mode of operation. The first preamplifier **185** is further configured to transmit the received acoustic signal to a first microphone input **IN1** of the multi-mode audio processor circuit **157** for use in a noise cancellation algorithm. The first preamplifier **185** is configured to receive a low voltage signal, for example, from about 0.1 mV to about 20 mV, amplify that signal and transmit the signal to the processor **151.**

As further illustrated in **Figure 2****,** a second preamplifier **186** may be coupled to the microphone **190.** The second preamplifier **186** is provided to amplify an acoustic signal received from the microphone **190** during the second mode of operation. The second preamplifier **186** is further configured to transmit the received acoustic signal to a second microphone input **IN2** of the multi-mode audio processor circuit **157** for use in the noise cancellation algorithm.

A switch **181** is also provided to isolate a path of the audio amplifier **183** from a path of the first preamplifier **185.** As illustrated in **Figure 2****,** when the switch **181** is in a first position A, the audio amplifier **183** is coupled to speaker/microphone **180** and the preamplifier **185** is decoupled from the speaker/microphone **180** (first mode). In contrast, when the switch is in a second position **B,** the preamplifier **185** is coupled to the speaker/microphone **180** and the audio amplifier **183** is decoupled from the speaker/microphone **180** (second mode). As illustrated in **Figure 2****,** operations of the switch may be controlled by the multi-mode audio processor circuit **157** in the processor **151** as discussed above with respect to **Figure 1****.** It will be understood that embodiments of the transducer assembly **187** illustrated in **Figure 2** are provided for exemplary purposes only and that embodiments of the present invention are not limited to this configuration.

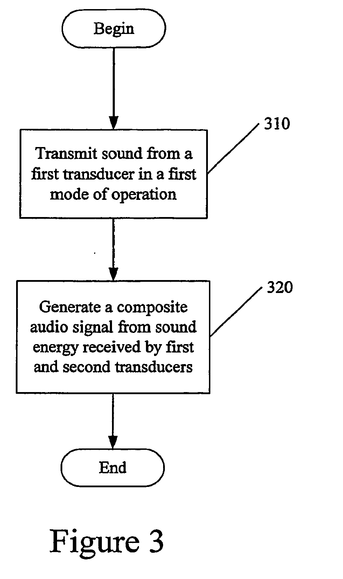

Referring now to **Figure 3****,** operations of a personal electronic device including a multi-mode audio processor circuit according to embodiments of the present invention will be discussed. Operations begin at block **310** by transmitting sound from a first transducer during a first mode of operation. During the first mode of operation, the first transducer may operate as a speaker, for example, a dynamic loudspeaker. The transducer may be included in a portable electronic device, for example, a mobile terminal. In these embodiments, the transducer may operate in the first mode of operation when the mobile terminal is idle, *i.e*., not receiving a request for a call, or when a call is being received.

A composite audio signal may be generated from sound energy received by the first transducer and a second transducer (block **320)** in the second mode of operation. The first and second transducers are configured to operate as microphones during the second mode of operation. The mobile terminal may operate in the second mode of operation when a call request to the mobile terminal is accepted by a user of the mobile terminal. In some embodiments of the present invention, a multi-mode audio processor circuit may be configured to receive sound energy/audio signals from the first and second transducers at first and second microphone inputs, respectively, and generate the composite audio signal from sound energy received by the first and second transducers in a second mode of operation. Accordingly, a two-microphone noise cancellation algorithm may be provided in mobile terminals having only one physical microphone, thereby possibly providing room in the housing of the mobile terminal for optional functionality.

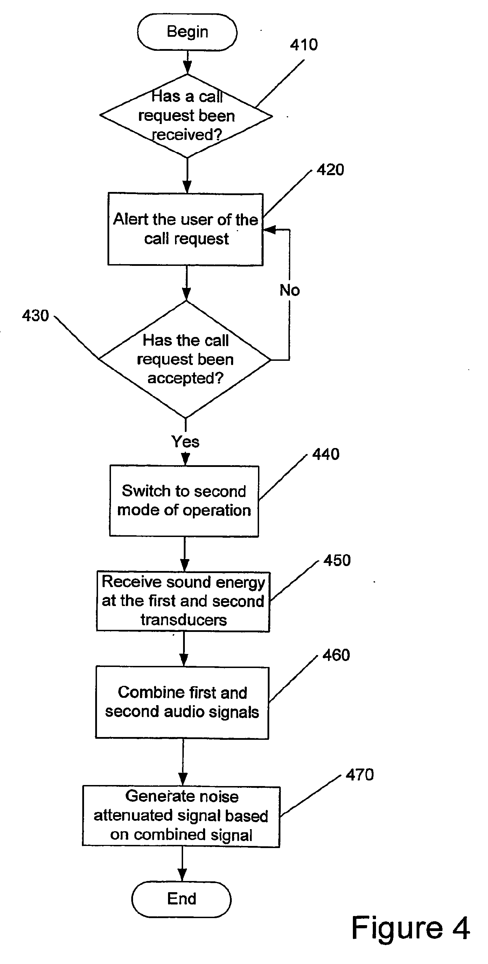

Referring now to **Figure 4****,** operations of portable electronic devices including multi-mode audio processor circuits which does not form part of the present invention will be discussed. Operations begin at block **410** by determining if a call request has been received at a portable electronic device, for example, a mobile terminal. If a call request has not been received, the mobile terminal may remain idle until a call request is received by the mobile terminal. If, on the other hand, a call request has been received by the mobile terminal, the user is alerted of the call request using a first transducer in the first mode of operation (block **420**). It is determined if the call requested has been accepted at the mobile terminal (block **430**). If the call request has not been accepted, the mobile terminal may continue alerting the user (block **420**) until the call is accepted or the call request has been terminated. If the call request has been accepted, the mobile terminal is switched from the first mode of operation to a second mode of operation (block **440**).

Sound energy may be received at the first and second transducers in the second mode of operation (block **450).** It will be understood that the first and second transducers may receive the sound energy created by, for example, a human voice, at different times and with different amplitudes, as one of the transducers may be positioned closer to the source of the sound energy, for example, a user's mouth. A multi-mode audio processor circuit may receive the sound energy from the first and second transducers at first and second microphone inputs, respectively, and combine first and second audio signals produced from the sound energy received by the first and second transducers, respectively, in the second mode of operation (block **460**). A single noise-attenuated audio signal may be generated based on the combined first and second audio signals (block **470**).

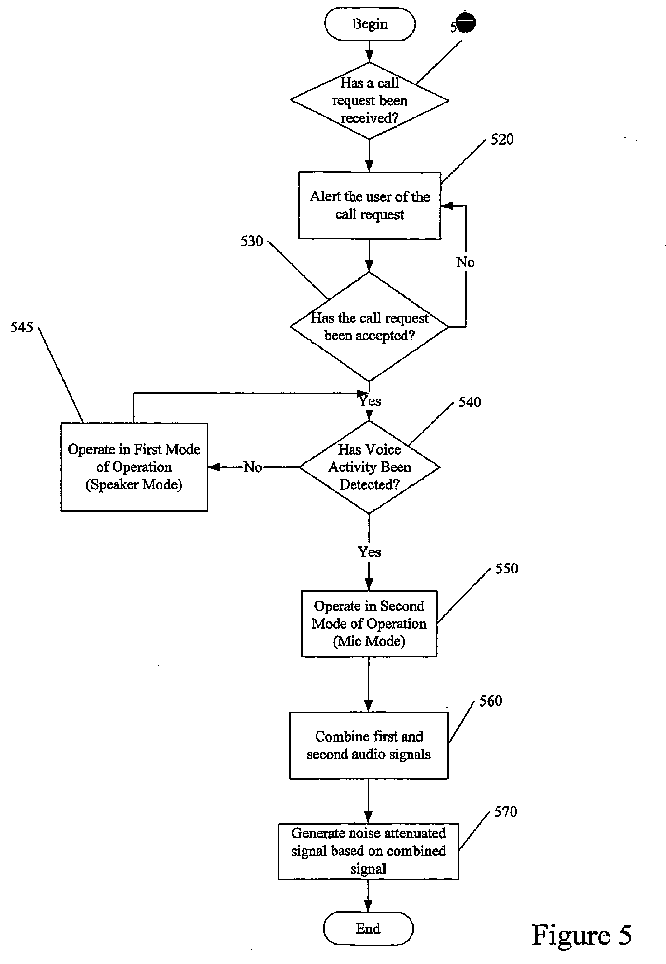

Referring now to **Figure 5**, operations of portable electronic devices including multi-mode audio processor circuits according to still further embodiments of the present invention will be discussed. Operations begin at block **510** by determining if a call request has been received at a portable electronic device, for example, a mobile terminal. If a call request has not been received, the mobile terminal may remain idle until a call request is received by the mobile terminal. If, on the other hand, a call request has been received by the mobile terminal, the user is alerted of the call request using a first transducer in the first mode of operation (block **520**). It is determined if the call requested has been accepted at the mobile terminal (block **530**). If the call request has not been accepted, the mobile terminal may continue alerting the user (block **520**) until the call is accepted or the call request has been terminated. If the call request has been accepted, the mobile terminal may determine if voice activity is detected (block **540**). Voice activity may be detected by, for example, voice activity detector **191** coupled to the microphone **190** as illustrated in **Figure 1****.** In these embodiments of the present invention the speaker/microphone may operate as both a dynamic speaker and a dynamic microphone when a user is on a call using, for example, hands-free operation of the mobile terminal such as push-to-talk functionality.

If voice activity is detected (block **540**) above a certain threshold at the microphone, the speaker/microphone may be configured to operate as a microphone (block **550**). Sound energy may be received at the microphone and the speaker/microphone in the second mode of operation. It will be understood that the microphone and speaker/microphone (first and second transducers) may receive the sound energy created by, for example, a human voice, at different times and with different amplitudes, as one of the transducers may be positioned closer to the source of the sound energy, for example, a user's mouth. A multi-mode audio processor circuit may receive the sound energy from the first and second transducers at first and second microphone inputs, respectively, and combine first and second audio signals produced from the sound energy received by the first and second transducers, respectively, in the second mode of operation (block **560**). A single noise-attenuated audio signal may be generated based on the combined first and second audio signals (block **570**). On the other hand, when voice activity is not detected at the microphone (block **540**), the speaker/microphone may operate as a speaker in the first mode of operation (block **545**) and the path of the microphone may be disabled until voice activity is detected.

As discussed briefly above with respect to **Figures 1** through **5**, portable electronic devices including multi-mode audio processor circuits according to embodiments of the present invention may apply two-microphone noise cancellation algorithms without providing a second physical microphone in the housing of the portable electronic device. Accordingly, devices including multi-mode audio processor circuits according to embodiments of the present invention may provide improved noise cancellation without causing the overall size of the housing to increase. Furthermore, the use of dynamic microphones may provide reduced interference with, for example, antennae, relative to electret microphones.

In the drawings and specification, there have been disclosed typical illustrative embodiments of the invention and, although specific terms are employed, they are used in a generic and descriptive sense only and not for purposes of limitation, the scope of the invention being set forth in the following claims.

## Claims

1. A portable electronic device (100), comprising:
a housing (101);
first and second spaced apart transducers (180, 190) positioned in the housing;
a multi-mode audio processor circuit (157) configured to transmit sound from the first transducer to a user in a first mode of operation and to generate a composite audio signal from sound energy received from the user by the first and second transducers in a second mode of operation;
a voice activity detector (191) coupled to said second transducer and configured to detect voice activity received by said second transducer (190);
an audio amplifier (183) configured to be coupled to the first transducer (180) in the first mode of operation if voice activity is not detected by the voice activity detector (191);
a preamplifier (185) configured to be coupled to the first transducer (180) in the second mode of operation if voice activity is detected by the voice activity detector (191): and
a switch (181) coupled to the first transducer (180) and configured to isolate a path of the audio amplifier (183) from a path of the preamplifier (185) during the first and second modes of operation, the switch (181) being configured to be in a first position coupled between the first transducer (180) and the audio amplifier (183) in the first mode of operation and to be in a second position coupled between the first transducer (180) and the preamplifier (185) in the second mode of operation.

2. The device (100) of Claim 1 wherein the multi-mode audio processor circuit (157) is configured to generate an audio signal from sound energy received by the second transducer (190) in the first mode of operation.

3. The device (100) of Claim 1 wherein the multi-mode audio processor circuit (157) is further configured to combine first and second audio signals produced from sound energy received by the first and second transducers (180, 190), respectively, in the second mode of operation to generate a noise-attenuated audio signal.

4. The device (100) of Claim 1, wherein the portable electronic device (100) comprises a mobile terminal and the mobile terminal is configured to:
receive (195) a call request at the mobile terminal (100) from a base station (24),
transmit (133) sound from a first transducer (180) in a first mode of operation by alerting a user of the mobile terminal (100) of the call request using the first transducer (180) as a speaker in the first mode of operation; and
generate a composite audio signal from sound energy received by the first transducer (180) and a second transducer (190) in a second mode of operation.

5. The device (100) of Claim 1, wherein the mobile terminal is further configured to:
operate the mobile terminal in the first mode of operation when the mobile terminal is idle or receiving a call; and
operate the mobile terminal in the second mode of operation when the mobile terminal is on a call.

6. The device (100) of Claim 1, wherein the mobile terminal is further configured to:
operate the mobile terminal in the first mode of operation when the mobile terminal is idle or receiving a call;
operate the mobile terminal in the first mode of operation when the mobile terminal is on a call when voice activity has not been detected;
operate the mobile terminal in the second mode of operation when the mobile terminal is on a call when voice activity has been detected.

7. The device (100) of Claim 1, wherein the mobile terminal is further configured to:
determine if the call request has been accepted at the mobile terminal; and
switch the mobile terminal from the first mode of operation to the second mode of operation if the call has been accepted at the mobile terminal.

8. The device (100) of Claim 7, wherein the mobile terminal is further configured to:
combine the first and second audio signals produced from sound energy received by the first and second transducers, respectively, in the second mode of operation; and
generate a noise-attenuated audio signal based on the combination of the first and second audio signals.

9. The device of Claim 1, wherein the first and second modes are first and second modes used during a hands-free operation of the portable electronic device.

## Patentansprüche

1. Tragbare elektronische Vorrichtung (100), umfassend:
ein Gehäuse (101);
erste und zweite Transducer (180, 190), die voneinander Abstand haben und in dem Gehäuse untergebracht sind;
eine Multimodus-Audioprozessorschaltung (157), die dafür konfiguriert ist, Klänge vom ersten Transducer zu einem Benutzer zu übertragen, und zwar in einem ersten Betriebsmodus, und dafür, ein zusammengesetztes Audiosignal zu erzeugen, und zwar aus Klangenergie, die von dem Benutzer über den ersten und den zweiten Transducer in einem zweiten Betriebsmodus empfangen wird;
einen Stimmaktivitätsdetektor (191), der an den zweiten Transducer angeschlossen und dafür konfiguriert ist, eine Stimmaktivität zu erkennen, die der zweite Transducer (190) empfängt;
einen Audioverstärker (183), der dafür konfiguriert ist, dass er im ersten Betriebsmodus mit dem ersten Transducer (180) verbunden wird, falls der Stimmaktivitätsdetektor (191) keine Stimmaktivität erkennt;
einen Vorverstärker (185), der dafür konfiguriert ist, dass er in dem zweiten Betriebsmodus mit dem ersten Transducer (180) verbunden wird, falls der Stimmaktivitätsdetektor (191) eine Stimmaktivität erkennt; und
einen Schalter (181), der an den ersten Transducer (180) angeschlossen und dafür konfiguriert ist, während des ersten und des zweiten Betriebsmodus einen Pfad des Audioverstärkers (183) von einem Pfad des Vorverstärkers (185) abzutrennen, wobei der Schalter (181) dafür konfiguriert ist, dass er sich im ersten Betriebsmodus in einer ersten Position befindet, die zwischen den ersten Transducer (180) und den Audioverstärker (183) geschaltet ist, und dass er sich im zweiten Betriebsmodus in einer zweiten Position befindet, die zwischen den ersten Transducer (180) und den Vorverstärker (185) geschaltet ist.

2. Vorrichtung (100) nach Anspruch 1, wobei die Multimodus-Audioprozessorschaltung (157) dafür konfiguriert ist, ein Audiosignal aus Klangenergie zu erzeugen, die der zweite Transducer (190) im ersten Betriebsmodus empfängt.

3. Vorrichtung (100) nach Anspruch 1, wobei die Multimodus-Audioprozessorschaltung (157) zudem dafür konfiguriert ist, erste und zweite Audiosignale zu verbinden, die aus Klangenergie erzeugt werden, die der erste Transducer (180) bzw. der zweite Transducer (190) empfängt, und zwar im zweiten Betriebsmodus, damit ein rauschgemindertes Audiosignal erzeugt wird.

4. Vorrichtung (100) nach Anspruch 1, wobei die tragbare elektronische Vorrichtung (100) ein mobiles Endgerät umfasst und das mobile Endgerät dafür konfiguriert ist:
am mobilen Endgerät (100) eine Rufanforderung von einer Basisstation (24) zu empfangen (195),
in einem ersten Betriebsmodus Klänge von einem ersten Transducer (180) zu übertragen (133), wodurch ein Benutzer des mobilen Endgeräts (100) auf die Rufanforderung aufmerksam gemacht wird, und der erste Transducer (180) im ersten Betriebsmodus als Lautsprecher verwendet wird; und
ein zusammengesetztes Audiosignal aus Klangenergie zu erzeugen, die in einem zweiten Betriebsmodus vom ersten Transducer (180) und einem zweiten Transducer (190) empfangen wird.

5. Vorrichtung (100) nach Anspruch 1, wobei das mobile Endgerät ferner dafür konfiguriert ist:
das mobile Endgerät im ersten Betriebsmodus zu betreiben, wenn das mobile Endgerät im untätigen Zustand ist oder einen Anruf empfängt; und
das mobile Endgerät im zweiten Betriebsmodus zu betreiben, wenn sich das mobile Endgerät in einem Gespräch befindet.

6. Vorrichtung (100) nach Anspruch 1, wobei das mobile Endgerät ferner dafür konfiguriert ist:
das mobile Endgerät im ersten Betriebsmodus zu betreiben, wenn das mobile Endgerät im untätigen Zustand ist oder einen Anruf empfängt;
das mobile Endgerät im ersten Betriebsmodus zu betreiben, wenn sich das mobile Endgerät in einem Gespräch befindet und keine Stimmaktivität festgestellt wird;
das mobile Endgerät im zweiten Betriebsmodus zu betreiben, wenn sich das mobile Endgerät in einem Gespräch befindet und eine Stimmaktivität festgestellt wird.

7. Vorrichtung (100) nach Anspruch 1, wobei das mobile Endgerät weiterhin dafür konfiguriert ist:
festzustellen, ob die Rufanforderung an dem mobilen Endgerät angenommen wird; und
das mobile Endgerät aus dem ersten Betriebsmodus in den zweiten Betriebsmodus umzuschalten, falls der Anruf an dem mobilen Endgerät angenommen wird.

8. Vorrichtung (100) nach Anspruch 7, wobei das mobile Endgerät zudem dafür konfiguriert ist:
im zweiten Betriebsmodus das erste und das zweite Audiosignal zu verbinden, die aus Klangenergie erzeugt werden, die der erste bzw. der zweite Transducer empfängt; und
ausgehend von den kombinierten ersten und zweiten Audiosignalen ein rauschgemindertes Audiosignal zu erzeugen.

9. Vorrichtung nach Anspruch 1, wobei der erste und der zweite Modus ein erster und ein zweiter Modus sind, die während eines Freisprechbetriebs der tragbaren elektronischen Vorrichtung verwendet werden.

## Revendications

1. Dispositif électronique portable (100), comprenant:
un boîtier (101);
des premier et deuxième transducteurs espacés (180, 190) positionnés dans le boîtier;
un circuit processeur audio multi-mode (157) configuré pour transmettre le son du premier transducteur à un utilisateur dans un premier mode d'opération et pour produire un signal audio composite de l'énergie sonore reçue de l'utilisateur par les premier et deuxième transducteurs dans un deuxième mode d'opération;
un détecteur d'activité vocale (191) couplé audit deuxième transducteur et configuré pour détecter l'activité vocale reçue par ledit deuxième transducteur (190);
un amplificateur audio (183) configuré pour être couplé au premier transducteur (180) dans le premier mode d'opération si l'activité vocale n'est pas détectée par le détecteur d'activité vocale (191);
un préamplificateur (185) configuré pour être couplé au premier transducteur (180) dans le deuxième mode d'opération si l'activité vocale est détectée par le détecteur d'activité vocale (191); et
un commutateur (181) couplé au premier transducteur (180) et configuré pour isoler un chemin de l'amplificateur audio (183) d'un chemin du préamplificateur (185) durant les premier et second modes d'opération, le commutateur (181) étant configuré pour être dans une première position couplée entre le premier transducteur (180) et l'amplificateur audio (183) dans le premier mode d'opération et pour être dans une seconde position couplée entre le premier transducteur (180) et le préamplificateur (185) dans le deuxième mode d'opération.

2. Dispositif (100) selon la revendication 1, dans lequel le circuit de processeur audio multi-mode (157) est configuré pour produire un signal audio à partir de l'énergie sonore reçue par le deuxième transducteur (190) dans le premier mode d'opération.

3. Dispositif (100) selon la revendication 1, dans lequel le circuit de processeur audio multi-mode (157) est configuré en outre pour combiner des premier et deuxième signaux audio produits par l'énergie sonore reçue par les premier et deuxième transducteurs (180, 190), respectivement, dans le deuxième mode d'opération pour produire un signal audio d'un bruit atténué.

4. Dispositif (100) selon la revendication 1, dans lequel le dispositif électronique portable (100) comprend un terminal mobile, et le terminal mobile est configuré pour:
recevoir (195) une demande d'appel au terminal mobile (100) d'une station de base (24),
transmettre (133) le son d'un premier transducteur (180) dans un premier mode d'opération en alertant un utilisateur du terminal mobile (100) de la demande d'appel en utilisant le premier transducteur (180) comme haut-parleur dans le premier mode d'opération; et
produire un signal audio composite à partir de l'énergie sonore reçue par le premier transducteur (180) et un deuxième transducteur (190) dans un deuxième mode d'opération.

5. Dispositif (100) selon la revendication 1, dans lequel le terminal mobile est configuré en outre pour:
faire fonctionner le terminal mobile dans le premier mode d'opération lorsque le terminal mobile est inactif ou recevant un appel; et
faire fonctionner le terminal mobile dans le deuxième mode d'opération lorsque le terminal mobile est en appel.

6. Dispositif (100) selon la revendication 1, dans lequel le terminal mobile est configuré en outre pour:
faire fonctionner le terminal mobile dans le premier mode d'opération lorsque le terminal mobile est inactif ou reçoit un appel;
faire fonctionner le terminal mobile dans le premier mode d'opération lorsque le terminal mobile est en appel lorsque l'activité vocale n'a pas été détectée;
faire fonctionner le terminal mobile dans le deuxième mode d'opération lorsque le terminal mobile est en appel lorsque l'activité vocale a été détectée.

7. Dispositif (100) selon la revendication 1, dans lequel le terminal mobile est en outre configuré pour:
déterminer si la demande d'appel a été acceptée au terminal mobile; et
commuter le terminal mobile du premier mode d'opération au deuxième mode d'opération si l'appel a été accepté au terminal mobile.

8. Dispositif (100) selon la revendication 7, dans lequel le terminal mobile est en outre configuré pour:
combiner les premier et deuxième signaux audio produits à partir de l'énergie sonore reçue par les premier et deuxième transducteurs, respectivement, dans le deuxième mode d'opération; et
produire un signal audio d'un bruit atténué sur la base de la combinaison des premier et deuxième signaux audio.

9. Dispositif selon la revendication 1, dans lequel les premier et deuxième modes sont des premier et deuxième modes utilisés durant une opération mains libres du dispositif électronique portable.
